Europäisches Patentamt

European Patent Office

Office européen des brevets

(19)

(11) Numéro de publication : **0 148 696**
**B1**

(12) FASCICULE DE BREVET EUROPÉEN

(45) Date de publication du fascicule du brevet :
07.09.88

(51) Int. Cl.⁴ : **E 21 B 49/08**, G 01 N 1/12,
G 01 N 1/14

(21) Numéro de dépôt : 84402691.4

(22) Date de dépôt : 21.12.84

(54) **Dispositif pour prélever un échantillon représentatif du fluide présent dans un puits, et procédé correspondant.**

(30) Priorité : 22.12.83 FR 8320604

(43) Date de publication de la demande :
17.07.85 Bulletin 85/29

(45) Mention de la délivrance du brevet :
07.09.88 Bulletin 88/36

(84) Etats contractants désignés :
DE FR GB IT NL

(56) Documents cités :
FR-A- 2 123 178
US-A- 2 099 080
US-A- 3 095 930
US-A- 3 556 211
US-A- 3 859 851
US-A- 3 957 117

(73) Titulaire : SOCIETE DE PROSPECTION ELECTRIQUE
SCHLUMBERGER
42, rue Saint-Dominique
F-75340 Paris Cédex 07 (FR)
FR IT
Schlumberger Limited
277 Park Avenue
New York, N.Y. 10017 (US)
DE GB NL

(72) Inventeur : Chevassus-More, Alain Robert
6, rue André Neyts
F-92260 Fontenay-aux-Roses (FR)
Inventeur : Czernichow, Jean Arnold
7, avenue du Bois
F-92290 Chatenay Malabry (FR)

(74) Mandataire : Chareyron, Lucien et al
ETUDES ET PRODUCTIONS SCHLUMBERGER Service Brevets BP 202
F-92142 Clamart Cédex 07 (FR)

Jouve, 18, rue St-Denis, 75001 Paris, France

## Description

L'invention concerne l'étude des fluides présents dans un puits, et plus particulièrement un dispositif pour prélever un échantillon représentatif de ces fluides à une profondeur donnée.

Les fluides présents dans un puits se trouvent la plupart du temps sous forme d'un mélange complexe d'huile, de gaz et d'eau ; pour étudier les propriétés de ce mélange à une profondeur donnée, il est souhaitable de prélever un échantillon de ce fluide dans les conditions réelles de volume, pression et température, et de maintenir l'une de ces grandeurs constante jusqu'au lieu d'analyse. Une solution simple est de garder le volume de l'échantillon constant, et de le réchauffer par la suite à la température à laquelle l'échantillonnage a été effectué.

Le document US-A-3, 957, 117 décrit un dispositif pour prélever un ou plusieurs échantillons relativement importants en volume ; cependant il ne répond que très imparfaitement aux conditions évoquées ci-dessus du fait que l'organe de fermeture de la chambre d'échantillonnage comprime l'échantillon recueilli.

Le document US-A-3, 095, 930 propose une solution qui consiste à échantillonner le fluide en autorisant une chute de pression d'admission pratiquement nulle ; dès que la chambre d'échantillonnage est remplie, une commande mécanique déclenche automatiquement la fermeture de l'orifice d'admission, sans pour autant surcomprimer l'échantillon recueilli. Une fois remonté à la surface, l'échantillon est transféré, à pression et volume constants, dans un volume de transport permettant son acheminement au laboratoire d'analyse.

Cependant l'opération de transfert effectuée à la surface du puits apparait dangereuse du fait qu'elle est réalisée à des pressions très élevées nécessitant en particulier un équipement au mercure.

Le document US-A-3, 556, 211 décrit un dispositif similaire à celui évoqué dans le document US-A-3, 095, 930 et qui prévoit en outre une chambre de prélèvement amovible pouvant servir, une fois remplie et détachée, de chambre de transport, permettant ainsi de s'affranchir de l'opération de transfert.

Toutefois, ce dernier dispositif présente certains inconvénients. Tout d'abord, le fait de ne pouvoir prélever qu'un seul échantillon à chaque descente tend à immobiliser, pendant une durée non négligeable, des moyens importants tels que la tour de forage ou la production du puits. De plus, il nécessite une tige de commande située à l'intérieur de la chambre d'échantillonnage, pour déclencher la fermeture de celle-ci, ce qui diminue d'une façon sensible le volume disponible pour l'échantillon.

La présente invention permet de s'affranchir de ces inconvénients.

Selon l'invention, le dispositif pour prélever un échantillon de fluide présent dans un puits comprend les caractéristiques énumérées dans la revendication 1.

Les revendications 2 à 10 décrivent des modes de réalisation préférés de l'invention.

D'autres caractéristiques et avantages de l'invention apparaîtront à l'examen de la description détaillée qui va suivre, et des dessins annexés, sur lesquels :

- la figure 1 est une illustration générale très schématique d'un dispositif selon l'invention ;
- la figure 2 est une vue en coupe longitudinale de la partie de la figure 1 qui est comprise entre les points A et B ;
- la figure 3 est une vue en coupe transversale prise selon la ligne de coupe III de la figure 2 ;
- la figure 4 est une vue en coupe longitudinale de la partie du dispositif de la figure 1 qui est à droite du point A ;
- la figure 5 est une vue en coupe longitudinale correspondant sensiblement à la partie du dispositif de la figure 1 qui est à gauche du point B ;
- la figure 6 est une vue en coupe longitudinale de la partie du dispositif de la figure 1 qui est comprise entre les points D et C ;
- la figure 7 est une vue en coupe longitudinale partielle du dispositif de la figure 6, prise dans un plan de coupe différent ;
- les figures 8 et 9 sont des schémas de principe illustrant le fonctionnement du dispositif selon l'invention ;
- la figure 10 est un diagramme de pression servant également à illustrer le fonctionnement du dispositif selon l'invention ;
- la figure 11 montre différents assemblages d'outil de descente faisant intervenir un ou plusieurs dispositifs selon l'invention ;
- la figure 12 est un schéma électronique du dispositif selon l'invention ; et
- la figure 13 reprend et complète la figure 1, en regard de la figure 12, pour mieux faire comprendre celle-ci.

Le dispositif selon l'invention peut s'appliquer a priori aussi bien à un forage de prospection qu'à un puits en production. Le besoin de prélever un échantillon représentatif des fluides contenus dans le puits à une profondeur donnée peut en effet se présenter dans les deux cas. L'utilisation la plus fréquente est cependant celle d'un puits en production.

Des dispositifs pour la prise d'échantillons de fluides ont déjà été décrits, notamment dans le Brevet des Etats-Unis N° 3 095 930, déjà cité, et dans le Brevet français N° 7 102 766, publié sous le N° 2 123 178. La nature complexe des fluides à prélever est exposée dans ces documents, de même que leur caractère d'écoulement polyphasique. L'analyse complète de ces fluides ne peut se faire qu'en laboratoire. Il faut donc pouvoir reproduire au laboratoire les conditions dans lesquelles se trouvait le fluide lors du prélèvement. Comme précédemment indiqué, une solution consiste à conserver l'échantillon prélevé dans un volume constant.

La présente invention vient apporter un perfectionnement important, qui permet, d'une part, d'éviter un transvasement du fluide prélevé sur les lieux de production et, d'autre part, d'améliorer les performances, et la fiabilité, lors des opérations proprement dites d'échantillonnage en profondeur. Comme on le verra plus loin, il en résulte une meilleure utilisation des moyens installés sur le puits, tour de forage ou de production notamment.

A l'extrémité d'un câble, non représenté, est disposée de manière connue une chaîne d'outils comprenant un ou plusieurs dispositifs selon l'invention. Les différents outils peuvent être interconnectés par un système de connexion standard à 22 broches (« 22 pins »).

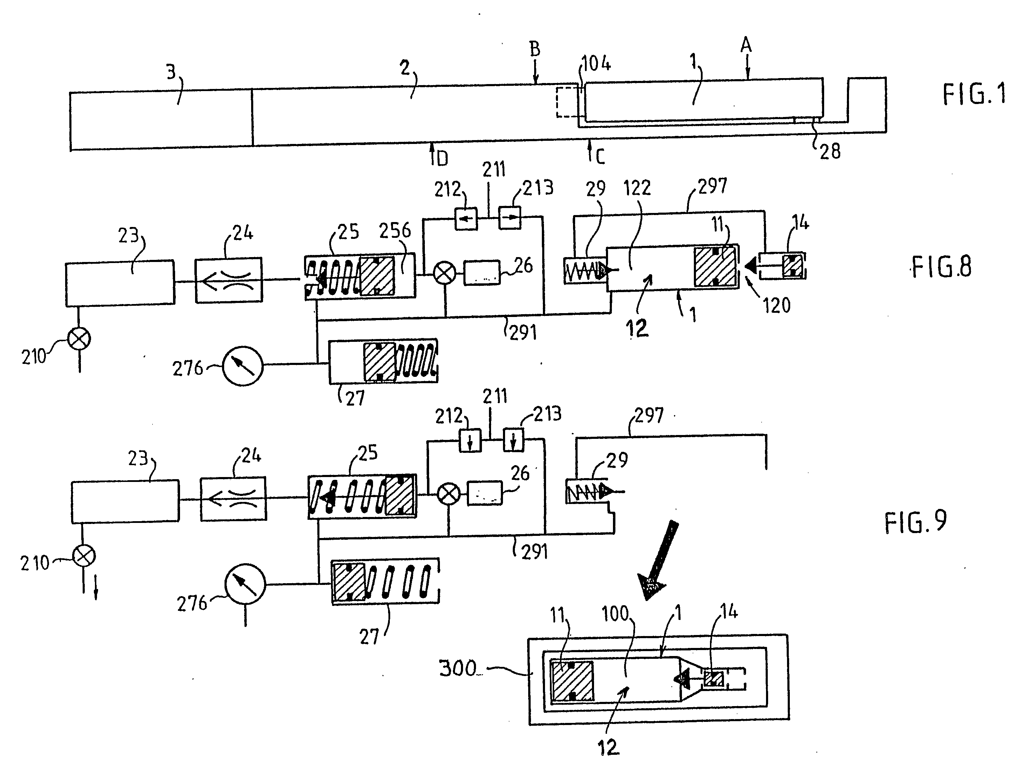

La figure 1 illustre la structure générale d'un dispositif selon l'invention. Celui-ci se compose d'un corps allongé adapté à être suspendu dans le puits à l'extrémité d'un câble. Sur la figure 1, il est supposé que ce corps est constitué de deux parties 2 et 3, réunies par une connexion à 22 broches. A son extrémité droite (l'extrémité inférieure dans le puits), la partie 2 du corps comporte un évidement dans lequel vient se fixer latéralement de façon amovible une chambre de prélèvement 1. La chambre s'engage axialement par son embout 104 dans le corps 2. Elle est fixée transversalement sur un méplat ce qui est schématisé en 28 sur la figure 1.

Dans cette structure, la partie 3 comporte une section électronique ajoutée au dispositif, et que l'on décrira plus loin.

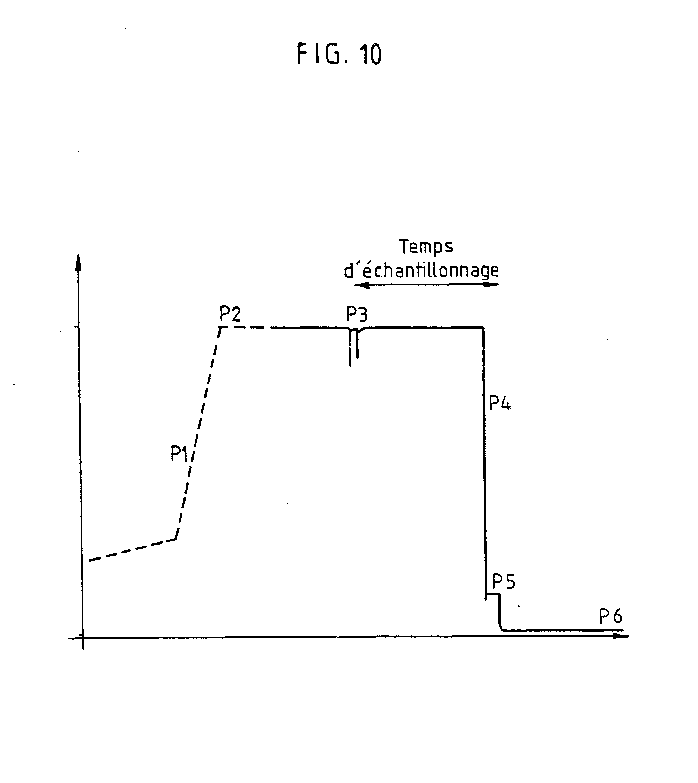

La partie 2 comporte, à gauche du point D, une chambre à air 23, suivie d'une restriction 24, d'une valve à commande hydraulique 25, et d'une valve à commande électrique 26. Ces éléments apparaissent dans le schéma de principe de la figure 8. Ils seront détaillés plus loin.

A droite du point D, et jusqu'au point C, la partie 2 comprend une chambre d'égalisation 27, à laquelle est connecté un manomètre 276.

L'ensemble de ces éléments est associé à une première tubulure principale 291, qui va jusqu'à la chambre de prélèvement 1. Cette dernière loge intérieurement un piston 11, lequel est mobile entre une position avant prélèvement où il obture complètement la cavité 12 de la chambre de prélèvement 1 du côté de son orifice d'entrée 120, et une position de fin de prélèvement, où il s'arrête. A ce moment, et d'une manière que l'on décrira plus loin, est actionnée une vanne d'arrêt 29 qui met en communication la première tubulure principale 291 avec une seconde tubulure principale 297. Celle-ci met en oeuvre un autre système à piston 14, qui va fermer l'orifice d'entrée 120.

La chambre de prélèvement peut alors être séparée du dispositif, et mise dans une enceinte de transport 4, comme illustré sur la figure 9.

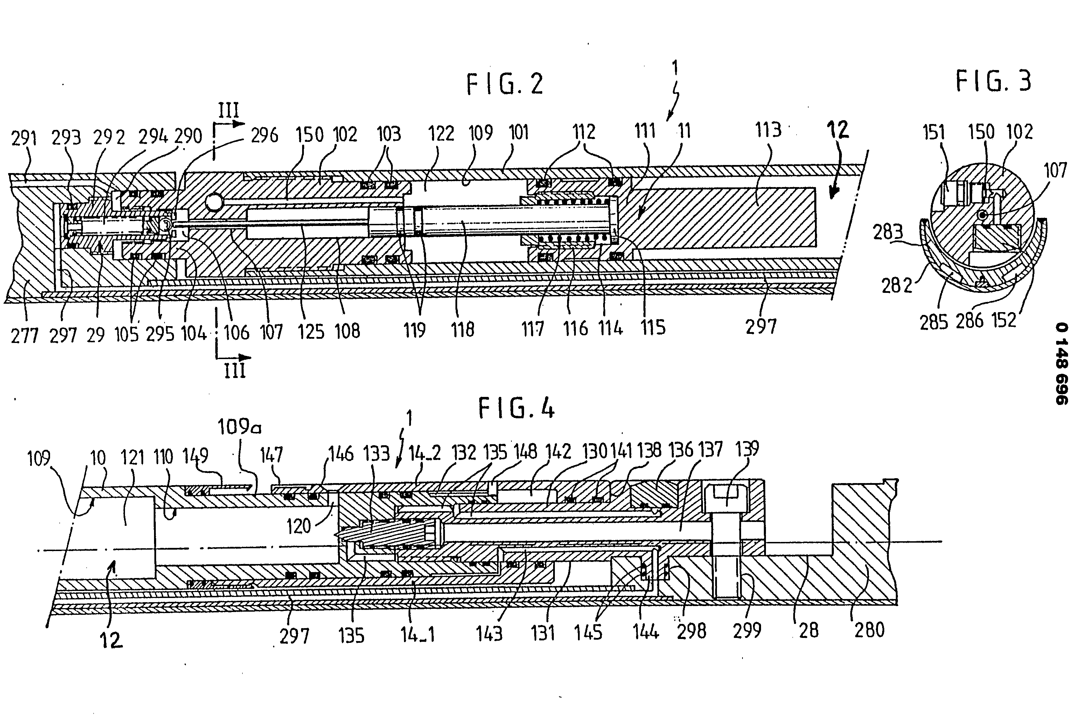

Il sera maintenant fait référence aux figures 2 à 4, qui illustrent de manière détaillée la partie du corps entourant la chambre de prélèvement.

Matériellement, la chambre de prélèvement 1 est constituée principalement d'un manchon 101 de forme générale cylindrique, fermé à ses deux extrémités. Son extrémité gauche est fermée par une pièce de bout 102, vissée sur le manchon, et munie d'une double étanchéité en 103. La paroi intérieure du manchon 101 définit un alésage 109, sur lequel coulisse le piston d'aspiration 11. Plus précisément, ce piston 11 comprend une partie de guidage 111, dont le pourtour cylindrique coopère avec l'alésage 109, avec une double étanchéité 112.

Vers la droite, le piston d'aspiration 11 comprend une protubérance cylindrique axiale 113, propre à venir se loger exactement dans un second alésage axial 110, faisant suite à l'alésage 109 avec un plus faible diamètre, et coaxialement à celui-ci.

La cavité utile pour l'échantillonnage est donc définie par cet alésage 110, et par la partie de l'alésage 109 située à droite du piston 11. Tout à fait à l'extrémité droite de cette cavité, le manchon 101 est traversé par un orifice d'entrée 120. Ce manchon 101 se ferme radialement pour clore la cavité d'échantillonnage ainsi formée, notée 121. Toutefois, la partie d'extrémité du manchon 101 loge différents équipements additionnels que l'on décrira plus loin.

A gauche du piston 11 est formée une autre partie 122 de la cavité interne de la chambre de prélèvement 1. La pièce de bout 102 adjacente comporte un alésage central 108, dans lequel peut s'introduire un piston d'arrêt 118, muni d'une double étanchéité en 119.

Le piston d'aspiration 11 est pour sa part guidé avec précision dans l'alésage 109. Il vient à son tour assurer un guidage précis du piston d'arrêt 118, pour lui permettre de s'introduire exactement dans l'alésage 108. A cet effet, le piston d'arrêt 118 comporte un épaulement d'extrémité 115 sollicité normalement par un ressort 117 en appui contre l'extrémité droite d'une cavité 114 ménagée dans la partie 111 du piston d'aspiration 11. Le ressort 117 est par ailleurs maintenu par un manchon annulaire 116 vissé dans la partie 111 du piston 11, l'extrémité droite du manchon 116 formant seconde butée pour l'épaulement 115.

A gauche de son alésage 108, la pièce de bout 102 comporte un passage 107, qui débouche en dehors à l'intérieur 106 d'un embout annulaire 104, muni d'une double étanchéité externe 105. A sa gauche, le piston d'arrêt 118 est prolongé d'une tige fine 125, qui lui est coaxiale, et peut entrer avec jeu dans le passage 107.

Tant que le piston 11 est suffisamment avancé vers la droite pour que la première des étanchéités 119 ne se soit pas encore engagée dans l'alésage 108, la face gauche de ce piston 11 est soumise à l'action d'un fluide emplissant la cavité 122, jusqu'à l'intérieur 106 de l'embout 104.

Cet embout pénètre avec sa double étanchéité 105 dans un logement 290 du corps 2. Dans ce même logement 290 aboutit la première tubulure principale 291. Par la pression de fluide existant dans cette tubulure 291, on pourra donc commander le mouvement du piston d'aspiration 11 depuis sa position (non représentée) complètement à droite dans la cavité 121, jusqu'à sa position d'arrêt en fin d'échantillonnage (représentée).

Sur le logement 290 est également vissée une valve ou vanne d'arrêt désignée dans son ensemble par 29. Cette vanne comporte un corps 292 fileté dans le corps 2 du dispositif de l'invention, avec intervention d'une étanchéité périphérique 293. Intérieurement, la vanne 29 comporte un équipage 294 de rappel élastique d'une bille 295 contre le siège de valve 296.

Dans la position des pistons 11 et 118 qui est illustrée sur la figure 2, à savoir la position d'arrêt en fin d'échantillonnage, l'étanchéité 119 stoppe l'écoulement de fluide depuis la chambre 122 vers la tubulure 291. En revanche, la pression demeure appliquée sur la face droite du piston 118, celui-ci continuant un peu son mouvement à l'encontre du rappel élastique 117. Sa tige 125 va alors pousser la bille 295, autorisant maintenant le passage de la pression de fluide à travers l'équipage 294 jusqu'à la tubulure 297 commençant à gauche de la valve d'arrêt 29. Cette tubulure 297 descend en partie basse dans la pièce 277 du corps 2, pour traverser toute la figure vers la droite, et être retransmise dans une autre pièce 280, également constitutive du corps 2.

Cette pièce 280 contribue à la définition de l'évidement logeant la chambre de prélèvement 1 : elle comporte en effet un méplat 28, dans lequel est prévu un second logement 298. S'y trouve également prévu un filetage 299, le logement 298 et le filetage 299 étant orientés radialement, alors que le premier logement 290 susmentionné est axial.

La tubulure 297 (seconde tubulure principale) débouche à l'intérieur du logement 298. Celui-ci reçoit un second embout 144 de la chambre d'échantillonnage 1, avec une double étanchéité 145. Cet embout 144 fait partie d'une pièce d'extrémité 130 de la chambre de prélèvement 1. La pièce 130 est vissée dans l'extrémité droite du manchon 101. Extérieurement, cette extrémité droite du manchon 101 définit un rétrécissement 109a, muni de deux doubles étanchéités de part et d'autre de l'orifice d'entrée 120. Un piston annulaire 14 coulisse extérieurement sur ce rétrécissement 109a. Son extrémité droite est munie d'un épaulement annulaire tourné radialement vers l'intérieur. Cet épaulement possède un alésage muni d'une double étanchéité 141, et coulissant sur l'alésage externe 131 de la pièce 130.

Le piston annulaire 14 est mobile entre une position de fermeture, 14-1, illustrée dans la moitié inférieure de la figure 4, et une position d'échantillonnage, 14-2, illustrée dans la moitié supérieure de la figure 4. Dans sa position d'échantillonnage, son extrémité de droite vient en butée sur un épaulement 138 de la pièce 130. Un orifice traversant 146 ménagé dans le piston annulaire 14 vient alors au droit de l'orifice d'entrée 120 de la chambre de prélèvement 1. Une cavité 142 est définie entre l'intérieur du piston annulaire 14 et l'alésage 131.

Cette cavité 142 communique avec une tubulure 143, s'ouvrant à l'intérieur de l'embout 144, en regard de la seconde tubulure principale 297. Ainsi, une dépression de fluide appliquée à cette tubulure 297 va attirer le piston 14 vers la gauche.

Il comporte une cheville de guidage 148 coulissant dans une cannelure du manchon 101, jusqu'à une butée 132.

C'est alors la position de fermeture 14-1 du piston annulaire, position dans laquelle il est maintenu par une série de griffes telles que 149, également espacées périphériquement, et venant en prise en 147 sur l'extrémité de gauche de ce piston annulaire 14.

L'extrémité droite du manchon 101 loge encore une valve 133, utilisée pour le drainage du fluide en laboratoire. Cette valve débouche à travers la paroi dans la cavité 121. Elle est actionnable à travers un alésage cylindrique 137, par exemple à l'aide d'un tournevis. L'ouverture de la valve 133 fait communiquer l'intérieur de la cavité 121 avec une tubulure 135, aboutissant derrière le bouchon de drainage 136.

Enfin, une vis 139 vient s'engager dans le filetage 299, pour permettre la fixation amovible de la chambre de prélèvement 1 sur le corps du dispositif de l'invention.

Il est maintenant fait référence à la figure 3, qui est une coupe transversale de la figure 2, à travers sa pièce de bout 102. On remarque que cette pièce de bout possède une autre tubulure 150 communiquant avec la cavité 122 située à gauche du piston d'aspiration 11. Cette tubulure 150 se retrouve dans la figure 3, où il apparaît qu'elle aboutit dans la chambre de travail d'une valve 151 à commande mécanique. Cette valve permet de faire communiquer la tubulure 150 avec une sortie par un bouchon de drainage 152. Cette disposition est utile pour déterminer le point de bulle de l'échantillon prélevé, sur le terrain, après que l'outillage a été remonté en surface.

On remarque encore sur la figure 3 que, au niveau de cette coupe, le corps est constitué de deux demi-coquilles 282 et 283, soudées l'une sur l'autre. Entre les deux coquilles sont ménagés des passages 285 et 286, qui permettent notamment le logement de conducteurs électriques allant vers des outillages situés en aval.

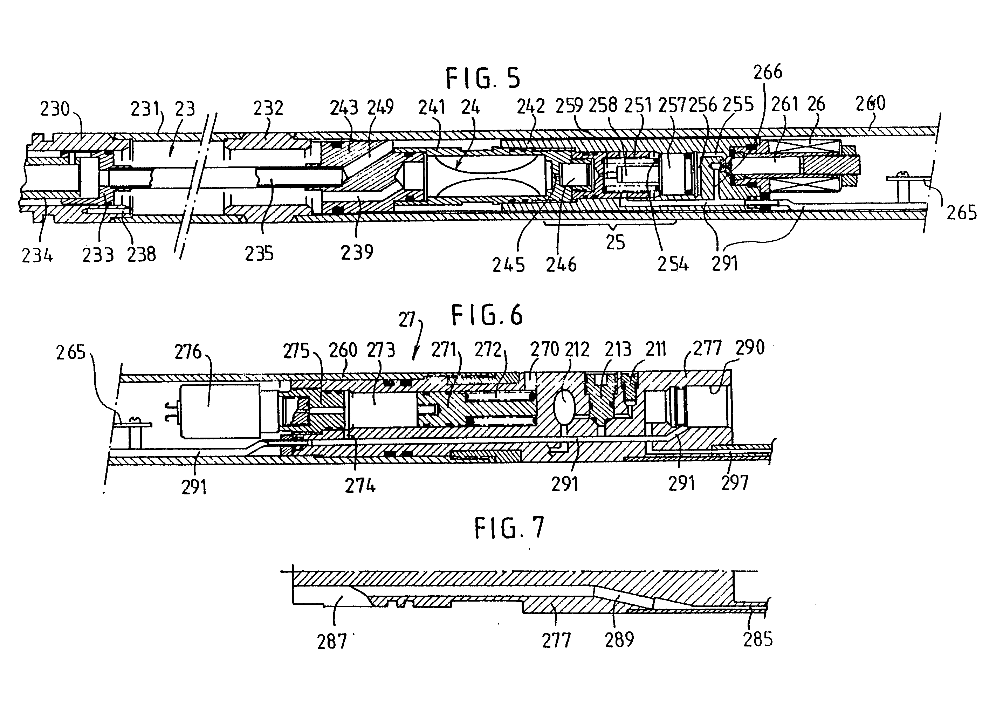

Il est maintenant fait référence aux figures 5 à 7. Ces figures contiennent l'ensemble des premiers moyens de commande, qui déterminent le mouvement du piston d'aspiration 11. Les seconds moyens de commande, constitués essentiellement de la vanne d'arrêt 29, vont faire basculer l'action des premiers moyens de commande en direction du piston annulaire de fermeture 14.

En partie gauche de la figure 5 est définie une chambre à air 23. Sur une pièce d'extrémité 230 est fixé un manchon annulaire 231, dont l'autre extrémité vient pour sa part se fixer sur une bague 232, fixée à son tour enfin sur un long manchon cylindrique 260.

A gauche de la chambre à air 23, la pièce d'extrémité 230 loge un support annulaire 233, formant appui pour une tige creuse 235. Cette tige 235 repose par son autre extrémité sur une seconde bague 243. Les bagues 233 et 243 délimitent avec les parois 230 à 232 ainsi que l'extrémité gauche du manchon 260 le volume externe de la chambre à air.

Cette chambre à air 23 est mise en surface à la pression atmosphérique, ou à une pression voisine. En profondeur, elle est soumise extérieurement à la pression hydrostatique du puits. Intérieurement, sa pression augmentera avec la température, en restant nettement inférieure à la pression du puits.

A gauche de la bague 233, est monté un tube 234 qui sert de support à la connection électrique de 22 broches. L'intérieur de la chambre 23 communique par une tubulure 238 avec une valve (non représentée sur la figure 5 ; et notée 210 sur les figures 8 et 9), qui sert à mettre en surface la chambre à air 23 à la pression atmosphérique.

Un prolongement axial de la pièce 243, de diamètre réduit, supporte une pièce cylindrique 241 logeant un étranglement 24. La pièce 241 se ferme à son extrémité de droite, à l'exception d'un mince orifice 245, qui contribue à la définition de l'étranglement 24. L'aval de l'étranglement 24 communique avec la chambre à air 23 par une tubulure 239 ménagée dans la pièce 243.

En amont de l'étranglement 24 est une valve à commande hydraulique. Immédiatement après l'orifice 245, la pièce 241 définit une cavité 246, entourée d'un filetage annulaire tourné vers l'extérieur. Sur ce filetage vient se placer le siège 251 de la vanne à commande hydraulique 25. La pièce 241 et ce siège 251 sont supportés ensemble par une pièce annulaire 242. Intérieurement, le siège de valve 251 définit une cavité 259. Plus à droite, la pièce 242 définit l'alésage d'un piston 257 formant l'organe de commande de l'aiguille mobile 258 de la valve 25. Cette aiguille 258 se déplace à l'encontre d'un rappel élastique 254 dans la cavité 259, de façon que sa pointe acérée vienne obturer l'orifice de communication entre la cavité 246 et la cavité 259. La face de droite du piston 257 est soumise à la pression régnant dans une cavité 256 formant chambre de commande pour la valve 25. Cette cavité 256 est soumise à la pression régnant dans une tubulure 255.

Plus à droite, l'extrémité de la pièce 242 reçoit sur un filetage en creux une valve à commande électrique, ou électrovanne notée dans son ensemble 26. Cette électrovanne 26 est logée dans l'enceinte ménagée à l'intérieur du cylindre 260, laquelle enceinte contient également un circuit imprimé 265, et un manomètre 276 que l'on décrira plus loin (figure 6).

A travers la tige creuse 235, le passage 249 qui la prolonge dans la pièce 243, l'évidement annulaire entourant la partie gauche de la pièce 241, et des passages non représentés ménagés dans la pièce 242, des conducteurs électriques arrivent jusqu'au circuit imprimé 265. Deux de ces conducteurs électriques alimentent en courant continu l'enroulement de l'électrovanne 26. Lorsque ce courant continu possède la bonne polarité, le plongeur 261 de l'électrovanne 26 est tiré vers la droite, autorisant le passage de fluide entre la conduite 255 et une conduite 266.

La première tubulure principale 291 communique d'une part avec la cavité 259 de la valve à commande hydraulique 25, d'autre part avec cette conduite 266. Cette tubulure 291 traverse l'enceinte interne du cylindre 260, pour venir (figure 6) rejoindre la tubulure 291 ménagée à l'intérieur de la pièce 277, qui va jusqu'à l'évidement recevant la chambre de prélèvement 1.

Dans sa partie gauche, cette pièce 277 définit intérieurement une cavité alésée 273. L'une des extrémités de la cavité alésée communique par un orifice 270 avec l'ambiance, c'est-à-dire avec les boues rencontrées en profondeur dans un tube de production. Un piston 271 muni de moyens d'étanchéité coulisse dans la cavité 273, un rappel élastique 272 étant ménagé entre ce piston et l'extrémité droite de la cavité 273. A l'autre bout, la cavité 273 est fermée par un embout fileté 275, à l'intérieur duquel est prévu un passage allant vers le manomètre 276, déjà cité. Ce manomètre qui détecte la pression régnant en profondeur, est par exemple un transducteur de pression du type potentiomètrique. L'indication électrique qu'il fournit est reprise sur le circuit imprimé 265, et renvoyée vers la surface.

Une courte conduite 274 fait communiquer la partie de la cavité 273 qui est à gauche du piston 271 avec la première tubulure principale 291. L'ensemble qui vient d'être décrit constitue ainsi une chambre d'égalisation 27 pour permettre que la pression à l'intérieur de la tubulure 291 se rapproche de la pression ambiante à la profondeur d'échantillonnage.

Plus à droite, la figure 6 fait apparaître deux vannes 212 et 213 connectées séparément à l'orifice d'entrée à bouchon 211. La vanne 212 (non illustrée en détail) sert à diriger le fluide hydraulique vers la chambre de commande 256 par une tubulure non représentée sur la figure 5 (voir figure 8). La vanne 213 sert à remplir la sonde à travers la tubulure 291, qui alimente toutes les chambres lui étant connectées.

On reconnaît enfin, tout à fait à droite de la figure 6, le logement 290 pour l'embout 104 de la chambre de prélèvement, et l'arrivée dans ce logement 290 de la tubulure 291.

Bien qu'elle se situe dans un plan de coupe différent, la seconde tubulure principale 297 est également figurée ici, partant du fond du logement 290. Il va de soi que les tubulures 291 et 297 ne communiquent pas à leur point de croisement.

La figure 7 illustre une autre vue encore prise dans un plan de coupe différent. Elle montre comment, depuis l'enceinte ménagée à l'intérieur du cylindre 260, on peut reprendre en 287 des connexions électriques qui passent dans une conduite 289, pour rejoindre l'un des passages tels que 285 et 286 ménagés en aval.

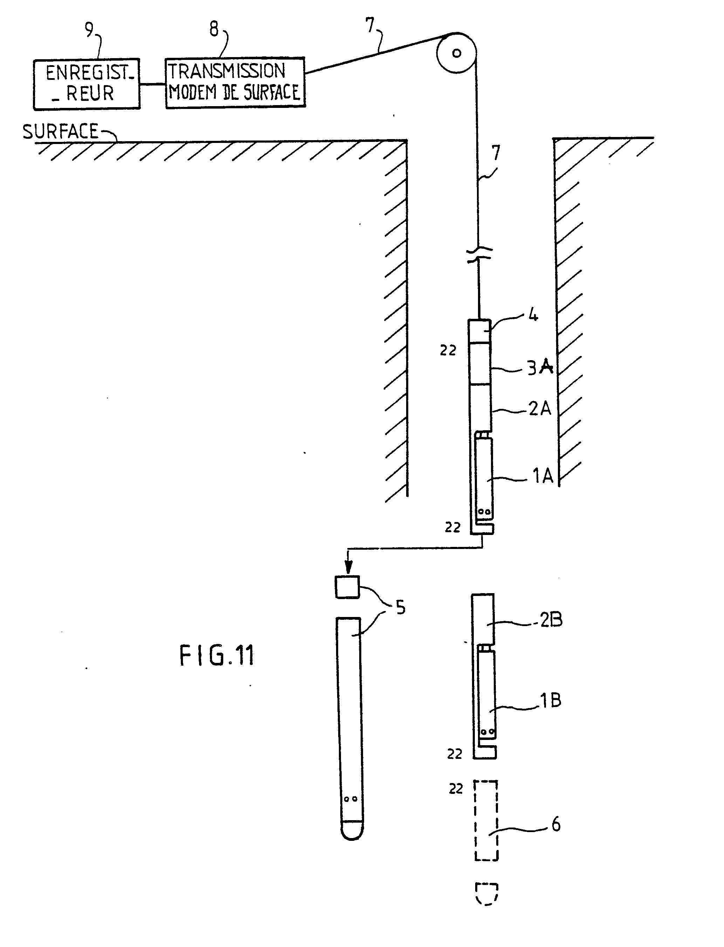

Il est maintenant fait référence aux figures 11 à 13.

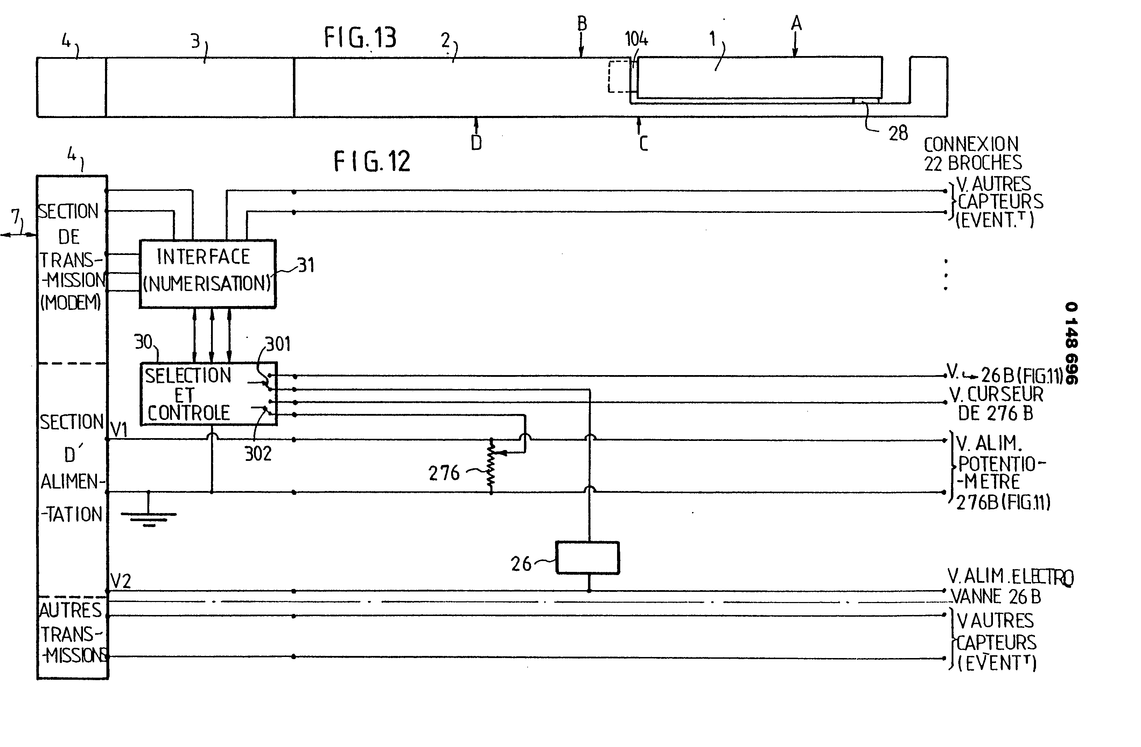

La partie 3 du dispositif comporte une section électronique schématisée sur la Figure 12 ; celle-ci comprend une interface 31 reliée d'une part à une section de transmission multiplexée bidirectionnelle 4, elle-même connectée à un câble 7, et d'autre part par une liaison à 22 broches à un circuit 30 de sélection et contrôle de l'électrovanne 26 et du manomètre 276.

La section 4 contient un modem non représenté en détail permettant d'échanger des informations numériques via le câble 7 avec un modem de surface 8. Le système de transmission numérique permet donc d'une part d'envoyer des ordres à partir de la surface jusqu'au circuit de sélection et de contrôle et, d'autre part, de transmettre les mesures faites par le manomètre 276 vers un enregistreur de surface 9.

La section électronique 3 joue le même rôle pour un éventuel second dispositif d'échantillonnage 1B et 2B qui serait équipé d'un manomètre 276B et d'une électrovanne 26B, tel que représenté sur les figures 11 et 12.

L'interface 31 numérise les mesures du manomètre 276 et les adapte à l'entrée du modem.

Le circuit de sélection et de contrôle 30 est commandé de la surface et permet par commutation, 301, de sélectionner et d'activer l'une ou l'autre électrovanne, par exemple selon la polarité du courant de commande.

Le manomètre 276 est par exemple un transducteur du type potentiométrique alimenté par une tension continue V1. L'électrovanne 26 est actionnée par une tension continue V2. Il est à noter que les 22 broches ne sont pas toutes utilisées, permettant ainsi, si nécessaire, l'adjonction d'autres dispositifs de mesure 5 et 6, tels que des capteurs de température, de densité et de débit.

Il est maintenant possible de décrire le fonctionnement d'ensemble du dispositif selon l'invention :

- En surface, la vanne 210 (figures 8 et 9) est utilisée pour mettre la chambre à air 23 à la pression atmosphérique.

- En ouvrant la vanne 212 (figure 8), on porte la chambre de commande 256 de la valve à commande hydraulique 25 à une haute pression, par exemple 15 bars, par l'entrée de fluide 211.

- La vanne 212 est maintenant fermée, et la vanne 213 ouverte. La même entrée de fluide 211 permet alors de porter la première tubulure principale 291 à une haute pression un peu inférieure, par exemple 10 bars (un montage différent de la vanne 25 permettrait d'utiliser au contraire une pression supérieure dans la tubulure 291). Le piston 14 étant dans sa position d'ouverture, le piston d'aspiration 11 est complètement repoussé pour fermer totalement la cavité 121, ce qui est schématisé sur la figure 8. Une pression de 10 bars règne donc dans la cavité 122. Il en est de même dans la seconde tubulure principale 297, la chambre d'échantillonnage étant bien entendu en place. Enfin, la même pression de 10 bars règne aussi à l'intérieur de la chambre de travail 259 de la vanne à commande hydraulique 25, et à l'intérieur de la cavité 273 de la chambre d'égalisation 27.

- Prêt pour l'échantillonnage, le dispositif est alors descendu en profondeur. Pendant la descente, la pression rencontrée est surveillée à l'aide du manomètre 276. Une courbe de pression typique est illustrée sur la figure 10. Sa partie P1 correspond à la pression rencontrée dans le puits. Le coude de cette partie P1 correspond à la pression dite du « point de bulle ».

- A l'arrivée à la profondeur désirée pour l'échantillonnage, un courant continu de la polarité voulue est envoyé sur l'électrovanne 26. A cette profondeur, la pression du puits est élevée. La présence de la chambre de compensation 27 permet de raisonner en termes de pressions relatives (par rapport à la pression du puits). L'électrovanne 26 met alors la chambre de commande 256 de la vanne hydraulique 25 (chambre qui est jusqu'à présent à 15 bars relatifs) en communication avec la première tubulure principale 291 (qui est jusqu'à présent à 10 bars relatifs). Il se produit une égalisation de pression à 10 bars relatifs, le volume de la chambre de commande 256 étant faible par rapport au reste du volume de liquide de commande. Le piston 257 de la vanne hydraulique 25 se déplace vers la droite, ouvrant la communication entre l'aval de l'étranglement 24 et la première tubulure principale 291. Un lent déplacement de fluide se produit alors, à travers l'étranglement 24, en direction de la chambre à air 23. La valve d'arrêt 29 étant fermée, ce mouvement de fluide produit une dépression sur la face gauche du piston d'aspiration 11, d'où un mouvement de celui-ci vers la gauche, et le début de l'échantillonnage. Sur la figure 10, la partie P2 marque l'arrivée à la pression correspondant à la profondeur voulue, elle est séparée de la partie P3 correspondant au temps d'échantillonnage proprement dit par un artefact dû à l'actionnement de l'électrovanne 26.

- Le piston d'aspiration 11 se déplace vers la gauche. Au moment où la tige 125 vient actionner la bille 295 de la vanne d'arrêt, la dépression régnant dans la première tubulure principale 291 est transmise à la seconde tubulure principale 297. Le piston annulaire 14 se déplace vers la gauche fermant l'orifice d'aspiration 120 et vient s'accrocher sur les griffes 149. Au même moment, le premier joint 119 vient en contact sur le cône d'entrée de l'alésage 108, isolant à la pression de l'échantillon la cavité 122. Dès que la cavité 120 est fermée, une dépression s'établit sur la face gauche du piston 118, qui continue donc à se déplacer vers la gauche jusqu'à venir en butée sur la pièce 116, le piston d'aspiration 11 étant stoppé, de façon à bien engager le joint 119 et assurer l'étanchéité parfaite de la chambre 122.

L'homme de l'art comprendra que l'échantillon prélevé est ainsi maintenu dans un volume constant.

Pendant cette phase de fermeture de la chambre d'échantillonnage, la pression décroît suivant la verticale P4. Elle va ensuite continuer à décroître, suivant la courbe P5, jusqu'à s'égaliser avec la pression de la chambre à air.

Après ces opérations, la chaîne d'outils descendue dans le puits peut être remontée, si un seul échantillonnage est à faire. Cependant, l'invention permet aussi de faire plusieurs échantillonnages. La figure 11 montre un premier dispositif d'échantillonnage 1A, 2A, 3A, qui peut être suivi soit d'un autre dispositif d'échantillonnage 1B, 2B, soit d'un autre outil schématisé en 5, le second dispositif d'échantillonnage pouvant lui aussi être suivi d'un autre outil 6. Tous ces outils sont connectés entre eux par des liaisons à 22 broches, comme précédemment indiqué.

En ce cas, c'est seulement après l'actionnement de ces autres outils qu'est effectuée la remontée de la chaîne d'outillages.

Une particularité est à noter lorsqu'un second dispositif d'échantillonnage est prévu en aval du premier : il a été remarqué précédemment que l'électrovanne 26 obéit à une polarité déterminée de courant continu. Le second outil peut posséder exactement la même structure, et être commandé sélectivement en utilisant simplement la polarité opposée pour la commande de l'électrovanne. Une variante consiste bien entendu à prévoir une commande de plusieurs électrovannes par des liaisons séparées et/ou multiplexées, ce qui permet de mettre en cascade plus de deux dispositifs d'échantillonnage selon l'invention.

Après la fin de la ou des opérations d'échantillonnage, la chaîne d'outillages descendue dans le puits est remontée jusqu'à la surface.

Contrairement à ce qui était le cas avec les dispositifs de la technique antérieure, aucun transvasement n'est nécessaire. Il suffit pour la ou les chambres d'échantillonnage de défaire leur vis de fixation 139, et de les séparer de l'outillage de descente, pour les transférer au laboratoire, dans le conteneur de sécurité schématisé en 300 sur la figure 9.

Il est fréquemment souhaitable de s'assurer sur le terrain de la validité des échantillons qui viennent d'être prélevés. L'un des moyens courants à cet effet est de mesurer la pression du « point de bulle » de ces échantillons. Cela se fait en déterminant la courbe de repressurisation du fluide prélevé.

Dans le dispositif selon l'invention, il apparait qu'un volume de fluide demeure dans la cavité 122 de la chambre de prélèvement 1. Ce volume du fluide de commande, en règle générale de l'huile, permet de vérifier la pression du point de bulle, sans courir le risque de perdre l'échantillon. De plus, le soutirage d'une quantité connue du fluide de la cavité 122 permet de détendre en partie l'échantillon en créant une poche de gaz et d'absorber les dilatations de l'huile dues à la température, pendant le transport. Bien entendu, pour l'analyse au laboratoire, la même quantité connue de fluide est réinjectée dans la cavité 122. On remet ainsi l'échantillon à son volume initial avant de le soutirer par la vanne 133 et l'orifice 146.

Pour déterminer le point de bulle, on procède comme suit : une enceinte de service est mise en connexion avec la tubulure 150, après enlèvement du bouchon 152. En actionnant la valve 151, on effectue des prélèvements du liquide contenu dans la cavité 122, par exemple deux centimètres cube par deux centimètres cube, tout en mesurant la pression. La libération des gaz dissous dans l'échantillon est alors aisément repérée par cette mesure de pression. Bien entendu, la même opération peut être faite sur différentes chambres d'échantillonnage utilisées lors d'une même intervention en profondeur.

En conclusion, il apparait que la présente invention offre les avantages suivants :

- début de l'échantillonnage obtenu à l'aide d'une électrovanne actionnée depuis la surface, par liaison conductrice ou par télémesure ; ceci permet de se passer de tout actionneur par explosif tel que ceux de la technique antérieure ;

- compensation de toutes les lignes et tubulures hydrauliques ;

- régulation de la vitesse d'échantillonnage, par réglage convenable de l'étranglement 24. Il est en effet apparu que cet étranglement pouvait être réglé de manière à obtenir un temps d'échantillonnage constant, typiquement de deux minutes, quelle que soit la pression d'échantillonnage. Il en résulte une commande opératoire sûr les opérations d'échantillonnage proprement dites.

- Utilisation de la chambre de prélèvement elle-même comme moyen de transport vers le laboratoire, cette chambre étant facilement amovible.

- Possibilité de contrôler le point de bulle.

- Fermeture très efficace de la chambre de prélèvement, ce qui élimine toute nécessité de prévoir l'intervention de mercure.

- Montage facile du dispositif d'échantillonnage en série avec d'autres types de sondes, et en particulier avec un second dispositif d'échantillonnage.

## Revendications

1. Dispositif pour prélever un échantillon représentatif du fluide présent dans un puits, du genre comprenant un corps allongé (1, 2, 3, 4) adapté à être descendu dans le puits à l'extrémité d'un câble, ledit corps comprenant :

— une chambre de prélèvement (1) amovible pouvant servir, une fois remplie et détachée, de chambre de transport de l'échantillon sous pression, ladite chambre contenant une cavité longitudinale alésée (12) munie :

— d'un orifice d'entrée (120) du fluide du puits,
— d'un piston d'aspiration (11), et
— d'un organe de fermeture (14) dudit orifice
— des premiers moyens (23 à 27) pour la commande du piston d'aspiration (11) par application d'une dépression sur sa face opposée à l'orifice d'entrée, et
— des seconds moyens (23, 297) pour la commande de l'organe de fermeture, dès que le piston a parcouru une course prédéterminée, caractérisé en ce que ladite chambre de prélèvement (1) est fixée latéralement sur un évidement du corps et en ce que lesdits seconds moyens pour la commande de l'organe de fermeture incluent une communication hydraulique (297) logée dans la partie évidée du corps pour actionner ledit organe de fermeture (14).

2. Dispositif selon la revendication 1, caractérisé

en ce que le corps (2) présente à une première extrémité dudit évidement, un premier logement (290) communiquant (291) avec les premiers moyens de commande (23 à 27),

en ce que la chambre (1) comporte à sa première extrémité correspondante un premier embout annulaire (104) propre à être introduit de façon étanche (105) dans le premier logement (290),

en ce qu'à son extrémité, l'évidement du corps comporte un méplat (28) muni d'un second logement (298), communiquant (297) avec les seconds moyens de commande (29), et

en ce que la chambre (1) comporte à sa seconde extrémité correspondante un deuxième embout annulaire (144) propre à être introduit de façon étanche (145) dans le second logement (298), ainsi que des moyens de fixation (139, 299) sur ledit méplat (28).

3. Dispositif selon la revendication 2, caractérisé en ce que la chambre (1) comprend en outre un second alésage (108) prolongeant sa cavité (122) à l'opposé de l'orifice d'entrée (120), et communiquant (107) avec l'intérieur (106) du premier embout (104), les premiers moyens de commande (23 à 27) étant agencés pour appliquer la dépression à l'intérieur du premier logement (290), et en ce qu'un piston d'arrêt (118) est relié au piston d'aspiration (11), et guidé pour pouvoir s'introduire de façon étanche (119) dans le second alésage (108), ce qui marque la fin de l'échantillonnage, tandis que les seconds moyens de commande (29) comprennent une valve d'arrêt (294 à 296) actionnée par une tige (125) reliée à ce piston d'arrêt (118), cette valve faisant communiquer (297) l'intérieur (106) du premier embout (104) avec l'intérieur du second logement (298).

4. Dispositif selon la revendication 3, caractérisé en ce que la liaison entre le piston d'aspiration et le piston d'arrêt se fait par l'intermédiaire de butées bidirectionnelles (115, 116) autorisant un déplacement relatif à l'encontre d'un rappel élastique (117) après la fin d'échantillonnage.

5. Dispositif selon l'une des revendications 3 ou 4, caractérisé en ce que l'organe de fermeture de l'orifice d'entrée comprend un piston annulaire (14) mobile axialement sur un alésage externe de la chambre (1) entre une position de travail où il présente un orifice homologue (146) en regard de celui (120) de la cavité, et une position de fermeture où il obture cet orifice, ce piston annulaire (14) délimitant avec la chambre un volume interne annulaire (142) lorsqu'il est dans sa position de travail, et la chambre comportant une tubulure (143) faisant communiquer son second embout (144) avec ledit volume interne annulaire, produisant par là le déplacement du piston annulaire (14) dans sa position de fermeture en fin d'échantillonnage.

6. Dispositif selon la revendication 5, caractérisé en ce que la chambre est pourvue de griffes (148) immobilisant le piston annulaire dans sa position de fermeture dudit orifice.

7. Dispositif selon l'une des revendications 1 à 6, caractérisé en ce que la position de fin d'échantillonnage du piston d'aspiration (11) est intermédiaire dans la cavité de la chambre, et en ce que le volume résiduel (122) de cette cavité du côté du piston d'aspiration (11), qui est opposé à l'orifice d'entrée (120), est mis en communication avec des moyens de drainage (150, 151, 152), ce qui permet une vérification sur le terrain du point de bulle de l'échantillon.

8. Dispositif selon l'une des revendications 1 à 7, caractérisé en ce que les premiers moyens de commande comprennent :

— une tubulure (291) communiquant avec l'intérieur du premier logement ;

— une chambre à air (23), initialement mise à la pression atmosphérique en surface,

— un étranglement (24) dont une extrémité est connectée à la chambre à air,

— une valve à commande hydraulique (25), possédant une chambre de commande et une chambre de travail qu'elle peut relier sur commande à l'autre extrémité dudit étranglement (24), cette chambre de travail étant par ailleurs reliée à la tubulure (291),

— une valve à commande électrique (26), susceptible d'être actionnée depuis la surface, ladite valve à commande électrique étant propre à établir une interconnexion entre la chambre de commande de la valve à commande hydraulique (25) et la tubulure (291),

— une chambre d'égalisation (7) contenant un piston de compensation (271) dont une face est reliée à ladite tubulure (291) et l'autre est soumise à un rappel élastique (272) en même temps qu'à la pression ambiante en profondeur (270), et

— des moyens susceptibles d'être actionnés en présence de la chambre d'échantillonnage sur le dispositif pour mettre d'abord la chambre de commande de la valve à commande hydraulique (25) à une première haute pression, et mettre ensuite la tubulure (291) à une seconde haute pression, ce qui a pour effet, l'orifice d'échantillonnage étant ouvert, d'amener le piston d'échantillonnage dans la position avant échantillonnage, où il occupe complètement la cavité d'échantillonnage tout en obturant l'orifice d'entrée, tandis que l'actionnement en profondeur de la valve à commande électrique produira l'échantillonnage.

9. Dispositif selon la revendication 8, caractérisé en ce qu'un capteur-transducteur de pression (276) est relié à ladite tubulure (291), ce qui permet une transmission électrique des informations de pression jusqu'à la surface, et la surveillance des opérations de descente en profondeur ainsi que d'échantillonnage.

10. Dispositif selon l'une des revendications 1 à 9, caractérisé en ce qu'au moins deux chambres d'échantillonnage sont mises en cascade sur un ou plusieurs corps allongés.

**Claims**

1. Apparatus for taking a sample representative of the fluid present in a well, the apparatus being of the type comprising an elongate body (1, 2, 3, 4) suitable for being lowered down into a well at the end of a cable, said body comprising :
— a removable sampling chamber (1) which may be used, once filled and removed, as a transportation chamber for the sample under pressure, said chamber containing a longitudinal bored cavity (12) provided with :
— an inlet orifice (120) for well fluid,
— a suction piston (11), and
— a closing member (14) for closing said inlet
— first means (23 to 27) for controlling the suction piston (11) by applying a depression on its face in opposite side from said inlet orifice, and
— second means (23, 297) for controlling the closing member as soon as the piston has moved by a predetermined stroke ; characterized in that said sampling chamber (11) is fixed sideways to a recess in the body, and in that said second means for controlling the closing member include a hydraulic communication (297) accommodated within the part of the body which presents the recess in order to actuate said closing member (14).

2. Apparatus according to claim 1, wherein the body (2) has a first socket (290) at a first end of said recess in communication (291) with the first control means (23 to 27) ;
the chamber (1) includes a first annular end portion (104) at its corresponding first end and suitable for insertion into the first socket (290) ;
the other end of the recess in the body includes a flat (28) fitted with a second socket (298) in communication with the second control means (29) ; and
the chamber (1) includes at its corresponding second end a second annular end portion (144) suitable for insertion in a sealed manner (145) in the second socket (298), together with fixing means (139, 299) for fixing to said flat (28).

3. Apparatus according to claim 2, wherein the chamber (1) further includes a second bore (108) extending its cavity (122) away from the inlet orifice (120), and communicating (107) with the inside (106) of the first end portion (104), the first control means (23 to 27) being arranged to apply the depression to the inside of the first socket (290) ; and a stop piston (118) is connected to the suction piston (11), and is guided to be inserted in a sealed manner (119) in the second bore (108), thus marking the end of sampling, while the second control means (29) include a stop valve (294 to 296) actuated by a rod (125) connected to said stop piston (118), said valve causing the inside (106) of the first end portion (104) to communicate (297) with the second socket (298).

4. Apparatus according to claim 3, wherein the connection between the suction piston and the stop piston is made via two-way abutment surfaces (115, 116) permitting relative displacement against a resilient return force (117) after the end of sampling.

5. Apparatus according to claim 3 or 4, wherein the closure member of the inlet orifice comprises an annular piston (14) which is axially movable over an outside cylindrical surface of the chamber (1) between a working position in which it presents a similar orifice (146) over the cavity orifice (120), and a closure position in which said cavity orifice (120) is closed, said annular piston (14) and the chamber delimiting an internal annular volume (142) when the piston is in its working position, and the chamber including a tube (143) putting its second end portion (144) into communication with said annular internal volume, thereby causing the annular piston (14) to be displaced to its closure position at the end of sampling.

6. Apparatus according to claim 5, wherein the chamber is provided with hooks (148) locking the annular piston in its position for closing said orifice.

7. Apparatus according to any one of claims 1 to 6 wherein the end of sampling position of the suction piston (11) is intermediate in the chamber cavity ; and the residual volume (122) in said cavity adjacent to the suction piston (11) on its side not adjacent to the inlet orifice (120) is put into communication with drainage means (150, 151, 152) to enable on site bubble point verification of the sample.

8. Apparatus according to any one of claims 1 to 7, wherein the first control means comprise :
a tube (291) communicating with the inside of the first socket ;
an air chamber (23) initially set to atmospheric pressure at the surface ;
a restriction (24) having one end connected to the air chamber ;
a hydraulically operated valve (25) having a control chamber and a working chamber which can be connected on command to the other end of said restriction (24), said working chamber being further connected to the tube (291) ;
an electrically controlled valve (26) suitable for being actuated from the surface, said electrically controlled valve being suitable for establishing interconnection between the hydraulically controlled valve's control chamber and the tube (291) ;
an equalizing chamber (7) containing a compensation piston (271) having one face connected to said tube (291) and having its other face subjected to a resilient return force (272) at the same time as the surround pressure at depth (270) ; and
means suitable for being actuated in the presence of the sampling chamber on the sampler to put the control chamber of the hydraulically controlled valve (25) at a first high pressure, and then to put the tube (291) at a second high pressure ;
this having the effect, while the sampling orifice is open, of bringing the sampling piston into its pre sampling position in which it fully occupies the sampling cavity and closes the inlet orifice, and actuating the electrically controlled valve at depth causes a sample to be taken.

9. Apparatus according to claim 8, wherein a pressure sensor transducer (276) is connected to the said tube (291), thereby enabling pressure data to be electrically transmitted to the surface, for monitoring the operations of lowering to depth and sampling.

10. Apparatus according to any one of claims 1 to 9, wherein at least two sampling chambers are connected in cascade on one or more elongate bodies.

**Patentansprüche**

1. Vorrichtung für das Nehmen einer Probe, die für das in einem Bohrloch vorhandene Fluid repräsentativ ist, der Bauart, die einen langgestreckten Körper (1, 2, 3, 4) umfaßt, der in das Bohrloch am Ende eines Kabels ablaßbar ist, welcher Körper umfaßt :
— eine lösbare Entnahmekammer (1), die nach Füllung und Lösen als Probetransportkammer unter Druck dienen kann, welche Kammer eine Längsbohrung (12) enthält, versehen mit
— einer Eintrittsöffnung (120) für das Bohrlochfluid,
— einem Ansaugkolben (11) und
— einem Fließorgan (14) für die genannte Öffnung,
— erste Mittel (23 bis 27) für das Steuern des Ansaugkolbens (11) durch Anlegen eines Unterdrucks an seiner der Eintrittsöffnung gegenüberliegenden Fläche und
— zweite Mittel (23, 297) für das Steuern des Schließorgans, sobald der Kolben einen vorgegebenen Hub zurückgelegt hat, dadurch gekennzeichnet, daß die genannte Entnahmekammer (1) seitlich in einer Ausnehmung des Körpers befestigt ist und daß die genannten zweiten Mittel für die Steuerung des Schließorgans eine hydraulische Kommunikation (297) umfassen, untergebracht in der ausgenommenen Partie des Körpers zum Betätigen des genannten Schließorgans (14).

2. Vorrichtung nach Anspruch 1, dadurch gekennzeichnet, daß der Körper (2) an einem ersten Ende der genannten Ausnehmung eine erste Aufnahme (290) aufweist, die mit den ersten Steuermitteln (23 bis 27) kommuniziert (291), daß die Kammer (1) an ihrem ersten entsprechenden Ende einen ersten ringförmigen Vorsprung (104) aufweist, der abgedichtet (105) in die erste Aufnahme (290) einfügbar ist, daß die Ausnehmung des Körpers an ihrem Ende eine Abplattung (28), versehen mit einer zweiten Aufnahme (298), aufweist, die mit den zweiten Steuermitteln (29) kommuniziert (297), und daß die Kammer (1) an ihrem zweiten entsprechenden Ende einen zweiten ringförmigen Fortsatz (144) aufweist, der in abgedichteter Form (145) in die zweite Aufnahme (298) einfügbar ist, sowie Mittel zum Befestigen (139, 299) an der genannten Abplattung (28).

3. Vorrichtung nach Anspruch 2 dadurch gekennzeichnet, daß die Kammer (1) ferner eine zweite Bohrung (108) aufweist die ihren Hohlraum (122) gegenüber der Eintrittsöffnung (120) verlängert und mit dem Innern (106) des ersten Ringfortsatzes (104) kommuniziert (107), wobei die ersten Steuermittel (23 bis 27) ausgebildet sind zum Anlegen des Unterdrucks an das Innere der ersten Aufnahme (290), und daß ein Anschlagkolben (118) mit dem Ansaugkolben (11) verbunden ist und geführt ist, um sich in abgedichteter Form (119) in die zweite Bohrung (108) einzufügen, was das Ende der Probenahme markiert, während die zweiten Steuermittel (29) ein Absperrventil (294 bis 296) umfassen, betätigt durch eine mit dem Anschlagkolben (118) verbundene Stange (125), wobei dieses Ventil das Innere (106) des ersten Fortsatzes (104) mit dem Innern der zweiten Aufnahme (298) kommunizieren (297) läßt.

4. Vorrichtung nach Anspruch 3, dadurch gekennzeichnet, daß die Verbindung zwischen dem Ansaugkolben und dem Anschlagkolben über zweiseitig wirkende Anschläge (115, 116) erfolgt, die die relative Verlagerung gegenüber einer elastischen Rückstellung (117) nach dem Ende der Probenahme ermöglichen.

5. Vorrichtung nach einem der Ansprüche 3 oder 4, dadurch gekennzeichnet, daß das Schließorgan der Eintrittsöffnung einen Ringkolben (14) umfaßt, der axial beweglich auf einer Außenbohrung der Kammer (1) zwischen einer Arbeitsposition ist, wo er eine homologe Öffnung (146) gegenüber derjenigen (120) des Hohlraums aufweist und einer Schließposition, wo er diese Öffnung abdeckt, wobei dieser Ringkolben (14) mit der Kammer ein inneres Ringvolumen (142) begrenzt, sobald er in seiner Arbeitsposition ist, und wobei die Kammer eine Röhre (143) umfaßt, die ihren zweiten Vorsprung (144) mit dem genannten inneren Ringvolumen kommunizieren läßt, zufolge der Verlagerung des Ringkolbens (14) in seine Schließposition am Ende der Probenahme.

6. Vorrichtung nach Anspruch 5, dadurch gekennzeichnet, daß die Kammer mit Krallen (148) versehen ist, die den Ringkolben in seiner Schließposition der genannten Öffnung festlegen.

7. Vorrichtung nach einem der Ansprüche von 1 bis 6, dadurch gekennzeichnet, daß die Position des Probenahmeendes des Ansaugkolbens (11) eine Zwischenposition in dem Hohlraum der Kammer ist und daß das Restvolumen (122) dieses Hohlraums auf Seiten des Ansaugkolbens (11) abgewandt der Eintrittsöffnung (120) in Kommunikation mit Drainagemitteln (150, 151, 152) gebracht wird, was eine Verifikation des Blasenpunktes der Probe an der Erdoberfläche ermöglicht.

8. Vorrichtung nach einem der Ansprüche 1 bis 7, dadurch gekennzeichnet, daß die ersten Steuermittel umfassen :
— eine mit dem Innern der ersten Aufnahme kommunizierende Röhre (291),
— eine Luftkammer (23), die ursprünglich an der Erdoberfläche dem Atmosphärendruck ausgesetzt ist,
— eine Einschnürung (24), deren eines Ende mit der Luftkammer verbunden ist,

— ein hydraulisches Steuerventil (25) mit einer Steuerkammer und einer Arbeitskammer, die es auf Kommando mit dem anderen Ende der genannten Einschnürung (24) verbinden kann, wobei die Arbeitskammer außerdem mit der Röhre (291) verbunden ist,

— ein elektrisches Steuerventil (26), das von der Erdoberfläche aus betätigbar ist und zum Herstellen einer Verbindung zwischen der Steuerkammer des hydraulischen gesteuerten Ventils (25) und der Röhre (291) ausgebildet ist,

— eine Ausgleichskammer (7), die einen Kompensationskolben (271) enthält, dessen eine Seite mit der genannten Röhre (291) verbunden ist und dessen andere einer elastischen Rückstellkraft (272) wie auch gleichzeitig dem Umgebungsdruck in der Tiefe (270) ausgesetzt ist und

— Mittel, die bei Vorhandensein der Probenahmekammer auf der Vorrichtung betätigbar sind, um zunächst die Steuerkammer des hydraulischen Steuerventils (25) einem ersten hohen Druck auszusetzen und danach die Röhre (291) einem zweiten hohen Druck,

was zur Folge hat, daß bei offener Probenahmeöffnung der Probenahmekolben in die Position vor der Probenahme gebracht wird, wo er vollständig den Probenahmehohlraum ausfüllt und die Eintrittsöffnung verschließt, während bei Betätigung des elektrischen Steuerventils in der Tiefe die Probenahme bewirkt wird.

9. Vorrichtung nach Anspruch 8, dadurch gekennzeichnet, daß ein Drucksensor- und -umsetzer (276) mit der genannten Röhre (291) verbunden ist, was eine elektrische Übertragung von Informationen des Drucks bis zur Oberfläche ermöglicht und die Überwachung der Arbeitsgänge bei Absenkung in die Tiefe wie auch die Probenahme.

10. Vorrichtung nach einem der Ansprüche 1 bis 9, dadurch gekennzeichnet, daß zumindest zwei Probenahmekammern in Kaskade auf einem oder mehreren langgestreckten Körpern angeordnet sind.

FIG.1

FIG.8

FIG.9

0 148 696

# FIG. 2

291 293 292 294 290 III 296 150 102 103 122 109 101 112 111 11 113 12

277 297 29 105 295 104 106 107 125 108 119 118 117 116 114 115 297

III

# FIG. 3

151 150 102 107

283 282 285 286 152

0 148 696

2

# FIG. 4

109 10 121 110 149 109a 147 146 133 1 14_2 132 135 148 142 130 141 138 136 137 139

120

12 297 135 14_1 143 131 145 144 298 299 28 280

## FIG. 5

230 231 23 232 243 249 241 24 242 259 258 251 257 256 255 266 261 26 260

234 233 238 235 239 245 246 25 254 291

## FIG. 6

265 276 275 260 273 27 271 272 270 212 213 211 277 290

291 274 291 291 297

## FIG. 7

287 277 289 285

0 148 696

**0 148 696**

# FIG. 10

FIG.11

FIG. 13

FIG. 12

SECTION DE TRANS- MISSION (MODEM)

INTERFACE (NUMERISATION) — 31

SELECTION ET CONTROLE

SECTION D'ALIMEN- TATION

AUTRES TRANS- MISSIONS

CONNEXION 22 BROCHES

V. AUTRES CAPTEURS (EVENT.ᵀ)

V. ↳ 26 B (FIG.11)

V. CURSEUR DE 276 B

V. ALIM. POTENTIO- METRE 276B (FIG.11)

V. ALIM. ELECTRO VANNE 26 B

V. AUTRES CAPTEURS (EVENTᵀ)

276

26

V1

V2

30

301

302

0 148 696